(19) Europäisches Patentamt
European Patent Office
Office européen des brevets

(11) EP 1 785 990 A2

## (12) EUROPEAN PATENT APPLICATION

(43) Date of publication:
16.05.2007 Bulletin 2007/20

(51) Int Cl.:
**G11B 7/095** (2006.01)  G11B 7/09 (2006.01)
G11B 7/08 (2006.01)

(21) Application number: 06076989.0

(22) Date of filing: 08.11.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 10.11.2005 KR 20050107640

(71) Applicant: Samsung Electronics Co., Ltd.
Suwon-si, Gyeonggi-Do (KR)

(72) Inventor: Bang, Kyu-chul
Yeongdeungpo-gu
Seoul (KR)

(74) Representative: Hylarides, Paul Jacques et al
Arnold & Siedsma,
Sweelinckplein 1
2517 GK The Hague (NL)

### (54) Tilt compensation method and apparatus

(57) Provided is a tilt compensation method and apparatus that effectively compensates for a tilt of an information storage medium. The tilt compensation method includes calculating a tilt value at more than one local point of the information storage medium using a focus-on-drive (FOD) sensitivity function and a tilt sensitivity function of a pickup of a recording and/or reproducing apparatus which records data onto and/or reproduces data from the information storage medium, obtaining a skew component of the pickup, obtaining an abnormal component caused by a sensitivity difference of the pickup with respect to the information storage medium; and compensating for the calculated tilt value using the obtained skew and abnormal components.

FIG. 2

```
                    ┌─────────┐
                    │  START  │
                    └─────────┘
                         │
 ┌───────────────────────────────────────────────┐
 │ CALCULATE TILT VALUE AT MORE THAN ONE          │──210
 │ LOCAL POINT OF INFORMATION STORAGE MEDIUM      │
 └───────────────────────────────────────────────┘
                         │
 ┌───────────────────────────────────────────────┐
 │ OBTAIN SKEW COMPONENT OF PICKUP BY DETECTING   │
 │ TILE VALUE THAT IS JITTER BEST AT INNER        │──220
 │ CIRCUMFERENCE OF INFORMATION STORAGE MEDIUM    │
 └───────────────────────────────────────────────┘
                         │
 ┌───────────────────────────────────────────────┐
 │ PRIMARILY COMPENSATE FOR TILT VALUE BY ADDING  │
 │ SKEW COMPONENT TO TILT CALCULATED AT           │──230
 │ THE LOCAL POINT                                │
 └───────────────────────────────────────────────┘
                         │
 ┌───────────────────────────────────────────────┐
 │ OBTAIN ABNORMAL COMPONENT CAUSED BY SENSITIVITY│
 │ DIFFERENCE OF PICKUP BY DETECTING TILT THAT IS │──240
 │ JITTER BEST AT OUTER CIRCUMFERENCE OF INFORMATION│
 │ STORAGE MEDIUM                                 │
 └───────────────────────────────────────────────┘
                         │
 ┌───────────────────────────────────────────────┐
 │ SECONDARILY COMPENSATE FOR TILT VALUE BY ADDING│
 │ ABNORMAL COMPONENT TO THE PRIMARILY            │──250
 │ COMPENSATED TILT VALUE                         │
 └───────────────────────────────────────────────┘
                         │
                    ┌─────────┐
                    │   END   │
                    └─────────┘
```

EP 1 785 990 A2

**Description**

CROSS-REFERENCE TO RELATED PATENT APPLICATION

This application claims the benefit of Korean Patent Application No. 10-2005-0107640, filed November 10, 2005 in the Korean Intellectual Property Office, the disclosure of which is incorporated herein in its entirety by reference.

BACKGROUND OF THE INVENTION

1. Field of the Invention

Aspects of the present invention relate to a tilt compensation method and apparatus that each effectively compensate for a tilt of an information storage medium.

2. Description of the Related Art

Generally, an optical pickup assembly includes an optical system having a light source, an object lens, an optical detecting unit, and an actuator to drive the object lens. A recording and/or reproducing apparatus reads and/or writes information from and/or onto the information storage medium by moving the optical pickup assembly, which is loaded on a shaft of a transfer unit installed on a deck of the apparatus, in a radial direction of the information storage medium.

Since optical information storage media are manufactured through different manufacturing processes by a variety of manufacturing companies, qualities of the optical information storage media tend to be different from one another. Furthermore, the information storage medium may be deformed by a variety of external factors. Therefore, a tilt of the information storage medium may occur during the reading and/or writing operations. In order to accurately read and/or write the information from and/or on the information storage medium, an amount of a relative tilt between the object lens and the information storage medium must be within an allowable range. Furthermore, a skew of a pickup during the detecting of the information recorded on the information storage medium may also occur due to other assembling errors. Therefore, in order to improve a read and/or write signal quality of the recording and/or reproducing apparatus, the tilt of the information storage medium and the skew of the pickup must be accurately compensated for. In order to compensate for the tilt of the information storage medium and the skew of the pickup, the reliability of the tilt detection is highly important. That is, the performance of the recording and/or reproducing apparatus depends on the reliability of the tilt detection.

SUMMARY OF THE INVENTION

Aspects of the present invention provide a tilt compensation method and an apparatus that relatively effectively compensates for a tilt of an information storage medium.

According to an aspect of the present invention, there is provided a method of operating an apparatus in which a pickup records and/or writes information from and/or onto an information storage medium to compensate for a tilt of the information storage medium, comprising: calculating a tilt value at more than one local point of the information storage medium using a focus-on-drive (FOD) sensitivity function and a tilt sensitivity function of a pickup of a recording and/or reproducing apparatus which records data onto and/or reproduces data from the information storage medium, obtaining a skew component of the pickup, obtaining an abnormal component caused by a sensitivity difference of the pickup with respect to the information storage medium; and compensating for the calculated tilt value using the obtained skew and abnormal components..

According to an aspect of the invention, the obtaining the skew component may include detecting a tilt value that is a jitter best at a first local point of the information storage medium.

According to an aspect of the invention, the skew component may be obtained by a subtraction of the tilt value that is the jitter best at the first local point from the tilt value calculated at the first local point.

According to an aspect of the invention, the first local point may be located on an inner circumference of the information storage medium.

According to an aspect of the invention, the obtaining the abnormal component may include a detection of a tilt value that is a jitter best at a second local point of the information storage medium.

According to an aspect of the invention, the abnormal component may be obtained by a subtraction of the tilt value that is the jitter best at the second local point from a tilt value that is primarily compensated using the skew component at the second local point.

According to an aspect of the invention, the second local point may be located on an outer circumference of the information storage medium.

According to an aspect of the invention, the compensating for the tilt may include primarily compensating for the tilt value by an addition of the obtained skew component to the calculated tilt value and secondarily compensating for the tilt value by an addition of the abnormal component to the primarily compensated tile value.

According to another aspect of the present invention, there is provided a method of operating an apparatus in which a pickup records and/or writes information from and/or onto an information storage medium to compensate for a tilt of the information storage medium, comprising: calculating a tilt value at a first local point on an inner circumference of the information storage medium using a focus-on-drive (FOD) sensitivity function and a tilt sensitivity function of the pickup and obtaining a skew component of the pickup by detecting a tilt value that is a jitter best at the first local point; calculating a tilt value at more than one local point of the information storage medium using the FOD sensitivity function and the tilt sensitivity function; obtaining an abnormal component caused by a sensitivity difference of the pickup by detecting a tilt value that is a jitter best at a second local point on an outer circumference of the information storage medium; and compensating for the calculated tilt value using the obtained skew and abnormal components.

According to still another aspect of the present invention, there is provided an apparatus to compensate for a tilt of an information storage medium, comprising: an optical pickup to emit and/or to receive light to and/or from the information storage medium; and a control unit to calculate a tilt value at more than one local point of the information storage medium using a focus-on-drive (FOD) sensitivity function and a tilt sensitivity function of the pickup, to obtain a skew component of the pickup and an abnormal component caused by a sensitivity difference of the pickup, and to compensate for the calculated tilt value using the obtained skew and abnormal components.

According to still yet another aspect of the present invention, there is provided an apparatus to compensate for a tilt of an information storage medium, comprising: a pickup to emit and/or receive light to and/or from the information storage medium; and a control unit to calculate a tilt value at a first local point on an inner circumference of the information storage medium using a focus-on-drive (FOD) sensitivity function and a tilt sensitivity function of an optical pickup of an recording and/or reproducing apparatus which records and/or reproduces data onto and/or from the medium, to obtain a skew component of the pickup by detecting a tilt value that is a jitter best at the first local point of the information storage medium and by detecting a tilt value that is a jitter best at the first local point, to calculate a tilt value at more than one local point of the information storage medium using the FOD sensitivity function and the tilt sensitivity function, to obtain an abnormal component caused by a sensitivity difference of the pickup by detecting a tilt value that is a jitter best at a second local point on an outer circumference of the information storage medium, and to compensate for the calculated tilt value using the obtained skew and abnormal components.

Additional and/or other aspects and advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the embodiments, taken in conjunction with the accompanying drawings of which:

FIG. 1 is a schematic view of a recording/reproducing apparatus to which a tilt compensation apparatus according to an embodiment of the present invention is applied;
FIG. 2 is a flowchart illustrating a tilt compensation method according to an embodiment of the present invention;
FIG. 3 is a reference view illustrating a method of calculating a tilt value at a predetermined local point of an information storage medium using an FOD sensitivity function according to an embodiment of the invention;
FIG. 4 is a reference view illustrating a method of obtaining a skew component of the pickup according to an embodiment of the invention;
FIG. 5 is a reference view illustrating a method of obtaining an abnormal component by the sensitivity difference according to an embodiment of the invention; and
FIGs. 6A and 6B are flowcharts to illustrate the tilt compensation method depicted in FIG. 2 in more detail.

DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

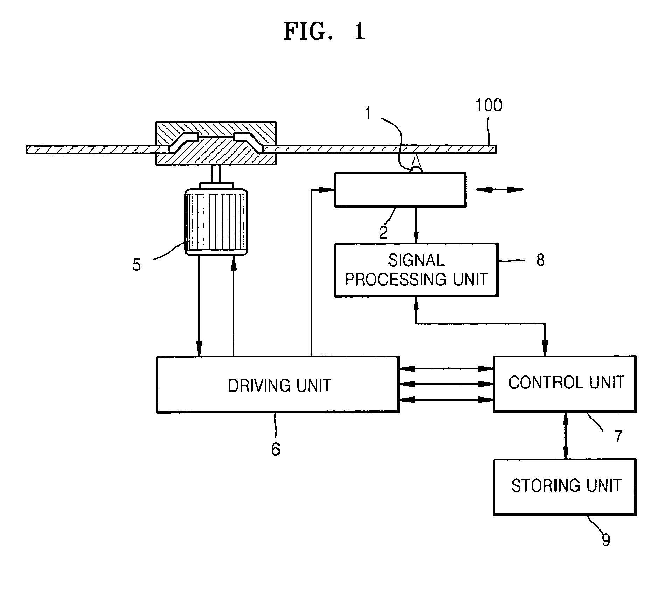

As shown in FIG. 1, a recording and/or reproducing apparatus includes a spindle motor 5 to rotate an information storage medium 100. An optical pickup assembly 2 reads and/or writes information from and/or onto the information storage medium 100. A driving unit 6 drives the optical pickup assembly 2 to move with respect to the information storage medium and drives the spindle motor 5 to cause the information storage medium to rotate. A signal processing unit 8 processes a signal detected by the optical pickup assembly 2. A control unit controls the recording and/or reproducing apparatus. A storing unit 9 stores data transmitted from an recalled by the control unit 7. The optical pickup assembly 2 is installed in the recording and/or reproducing apparatus and is movable in a radial direction of the information storage medium 100.

The optical pickup assembly 2 includes an optical system having an objective lens 1 to cause a convergence of light emitted from a light source onto the information storage medium 100 and an actuator to drive the objective lens 1. The light reflected from the information storage medium 100 is detected by an optical detector provided in the optical system and is converted into an electric signal through an opto-electronic conversion. The electric signal is then processed by the signal processing unit 8.

The driving unit 6 controls a rotational speed of the spindle motor 5, amplifies an inputted signal, and drives the optical pickup assembly 2.

The signal processing unit 8 is able to process a signal detected to calculate a tilt, a minimum jitter value (hereinafter referred to as "jitter best"), and a skew component of an orientation of a pickup (hereinafter referred to as a "skew component"). The signal processing unit 8 also processes an abnormal component caused by a sensitivity difference of the pickup with respect to a particular type of information storage medium. While note restricted thereto, the calculation may be performed at the signal processing unit 8 or the control unit 7.

The control unit 7 transmits focus servo, tracking servo and tilt servo commands that are controlled with reference to error signals that are transmitted from the signal processing unit 8 to the driving unit 6 to realize focusing servo, tracking servo, and tilt servo operations. The control unit 7 compensates for a tilt of the information storage medium loaded on the recording and/or reproducing apparatus according to a tilt compensation method of the present invention and controls the recording and/or reproducing apparatus to read and/or write information from and/or onto the information storage medium.

In order to compensate for the tilt of the information storage medium 100, the control unit 7 calculates a tilt value. To accomplish this, the control unit 7 uses focus-on-drive (FOD) sensitivity and tilt sensitivity functions of a pickup at more than one local point of the information storage medium 100 and stores the calculated tilt in the storing unit 9. Here, it is noted that the local point of the information storage medium refers to a particular radial position of a recording surface of the information storage medium. Then, the control unit 7 detects the skew component of the pickup and the abnormal component formed by a sensitivity difference of the pickup with respect to a particular type of information storage medium. The tilt value stored in the storing unit 9 is compensated for using the skew and abnormal components.

An example of the tilt compensation method will be now described in more detail. The control unit 7 calculates a tilt angle $\theta$ of the information storage medium 100 by measuring the FOD at the local point of the information storage medium 100. Then, a tilt value Tilt_fod is calculated in response to the tilt angle e using the focus-on-drive (FOD) sensitivity and tilt sensitivity functions. Then, in order to compensate for the skew of the pickup, the control unit 7 detects a tilt value (Tilt_jitter) that is the jitter best at an inner circumference of the information storage medium 100. The control unit 7 also calculates a skew component Tilt_skew of the pickup using a difference between the detected tilt value Tilt_jitter and a tilt value Tilt_fod1 at the inner circumference of the information storage medium 100. Lastly, the control unit 7 compensates for the tilt of the information storage medium by the skew component Tilt_skew. When the tilt is compensated for by the skew component as described above, the tilt is compensated for by a detection of the tilt skew without the need for a mechanical detection of the skew of the pickup as in the related art. In addition, since the FOD is used to calculate the tilt, the tilt compensation may be realized for a blank information storage medium. The above-described tilt compensation method according to aspects of the present invention may reduce a tilt detecting time as compared with the conventional method of detecting a tilt using a jitter at each local point.

When the FOD sensitivity and tilt sensitivity functions of the pickup are not accurate, the calculation may be erroneously performed and may cause the reliability of the tilt detection to deteriorate. In order to compensate for an abnormal component of the FOD sensitivity or tilt sensitivity functions, the control unit 7 detects a tilt that represents the jitter best at an outer circumference of the information storage medium 100, calculates the abnormal component using a sensitivity difference of the pickup between the skew-compensated tilt value and the tilt value that represents the jitter best at the outer circumference, and compensates for the tilt by an addition of the abnormal components to the skew-compensated tilt value.

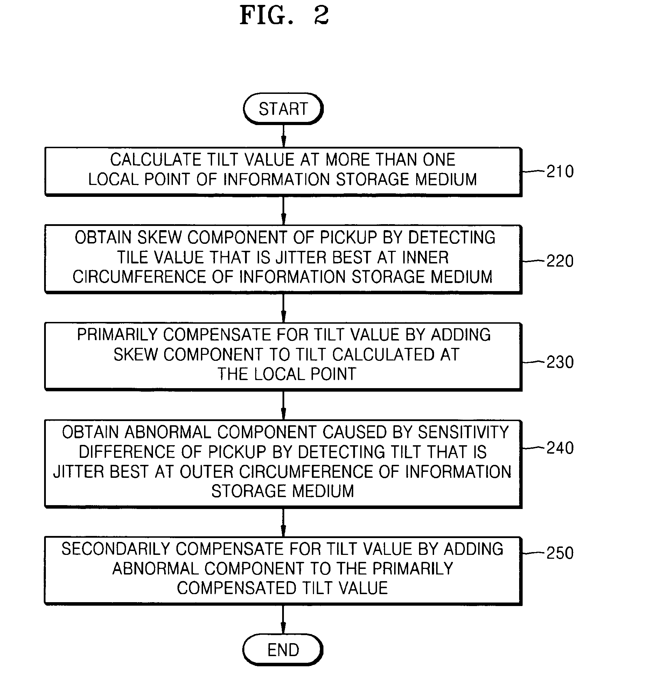

FIG. 2 is a flowchart illustrating the above-described tilt compensation method in more detail. A tilt value at more than one local point of the information storage medium is first calculated using an FOD sensitivity function and a tilt sensitivity function (210).

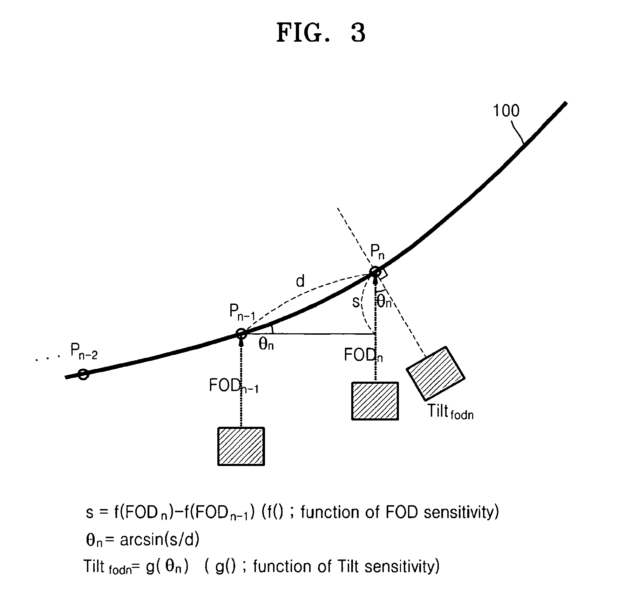

A method of calculating the tilt value will be described with reference to FIG. 3. FIG. 3 is a view illustrating a method of calculating the tilt value at a predetermined local point using the FOD. When the information storage medium is not level, the pickup and the information storage medium 100, which ideally should be oriented at the normal angle with respect to each other, will actually be tilted with respect to each other due to a variety of factors. Therefore, an angle stray $\theta n$ from a normal angle between the pickup and the information storage medium exists at a local point Pn of the information storage medium 100. The tilt value is calculated using the FOD sensitivity function according to the following equation.

$$Tilt_{fodn} = g(\Theta n)$$

where, the $g(\theta n)$ is the tilt sensitivity function.

The tilt sensitivity function $g(\theta n)$ is calculated according to the following equation.

$$g(\Theta n) = arcsin(s/d)$$

where, the "d" is a distance between $P_{n-1}$ and $P_n$ and the "s" is calculated according to the following equation.

$$S = f(FOD_n) - f(FOD_{n-1})$$

where, the $f(FOD_n)$ is the FOD sensitivity function.

As is described above, the tilt value at more than one local point of the information storage medium may be calculated using the FOD sensitivity function and the tilt sensitivity function.

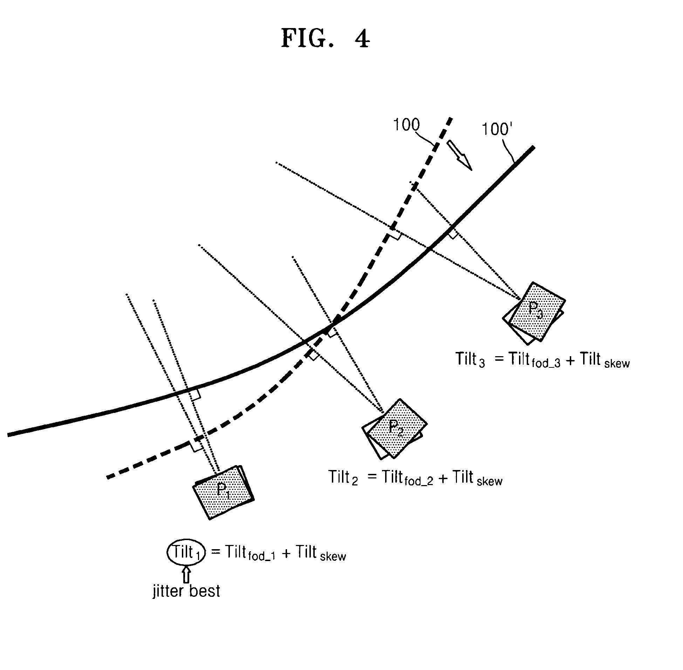

Referring again to FIG. 2, a tilt value, which represents the jitter best at the inner circumference of the information storage medium, is then detected to obtain a skew component of the pickup (220). This will be described in more detail with reference to FIG. 4.

FIG. 4 is a reference view illustrating a method of obtaining the skew component of the pickup. The skew component of the pickup is obtained by a subtraction of the tilt value that represents the jitter best at a predetermined local point of the information storage medium from a tilt value (the tilt value obtained by the method described with reference to FIG. 3) at the predetermined local point. The skew component of the pickup may be obtained at any local points of the information storage medium 100. For example, the skew component may be obtained at a local point located on the inner circumference of the information storage medium 100. The following description will be done based on an example when the skew component is obtained at the local point located on the inner circumference of the information storage medium.

The optical pickup assembly is placed on the inner circumference P1 of the information storage medium 100 and tilt driving current is applied to an actuator of the optical pickup assembly 2 to drive the actuator in a positive radial direction and/or a negative radial direction with respect to the information storage medium. In addition, tilt driving current is further applied to the actuator so as to improve the jitter characteristics of the apparatus in which the optical pickup assembly 2 is installed. Here, a jitter value may be continuously measured during the application of the tilt driving currents. Next, whether the measured jitter value is within an allowable range, i.e., if the measured jitter value represents the jitter best, is determined. Here, when the jitter value is found to be within a range between the lowest and highest standard limit values of the recording and/or reproducing apparatus, it is determined that the measured jitter value represents the jitter best. When the measured jitter value is not found to be within the range of jitter values that qualify as the jitter best, an amount of the tilt driving current applied to the actuator is varied slightly and whether the measured jitter value is within the range of jitter values that qualify as the jitter best is determined again. The variation of the amount of the current applied to the actuator may be repeated until the measured jitter value is determined to be within the range of jitter values that qualify as the jitter best.

When a tilt value that is obtained when the measured jitter value represents the jitter best is $Tilt_1$, the tilt value $Tilt_1$ is represented as a sum of a tilt value $Tilt_{fod\_1}$, that is calculated using the FOD and a tilt value $Tilt_{skew}$ that is obtained using the skew component of the pickup. This can be expressed by the following equation.

$$Tilt_1 = Tilt_{fod\_1} + Tilt_{skew}$$

Therefore, the tilt value $Tilt_{skew}$ that is obtained using the skew component of the pickup may be obtained according to the following equation.

$$Tilt_{skew} = Tilt_1 - Tilt_{fod\_1}$$

Next, the skew component is added to the tilt value calculated at more than one local point to primarily compensate for the tilt (230).

Referring to FIG. 4, the tilt is primarily compensated for by an addition of the tilt value that is calculated using the skew component, which is obtained at the inner circumference of the information storage medium, to the tilt value that is calculated at another local point of the information storage medium. For example, the primary compensation of the tilt $Tilt_2$ at a local point $P_2$, which is separated from the inner circumference of the information storage medium by a predetermined distance, may be realized according to the following equation.

$$Tilt_2 = Tilt_{fod\_2} + Tilt_{skew}$$

Next, the tilt value that represents the jitter best at the outer circumference of the information storage medium is detected to obtain an abnormal component caused by a sensitivity difference of the pickup (240) with respect to a particular type of information storage medium. As is described with reference to FIG. 3, the FOD sensitivity function and the tilt sensitivity function are used to calculate the tilt value at each local point of the information storage medium. Although the FOD sensitivity function and the tilt sensitivity function will be finally determined with reference to actual experimental data, the FOD sensitivity function and the tilt sensitivity function may not match with a particular type of optical information storage medium by a certain abnormal component. When the FOD sensitivity function and the tilt sensitivity function do not match with the information storage medium, the calculation of the tilt value may be erroneously performed. Therefore, the process 240 of FIG. 2 is related to an operation of compensating for the abnormal component by the sensitivity functions.

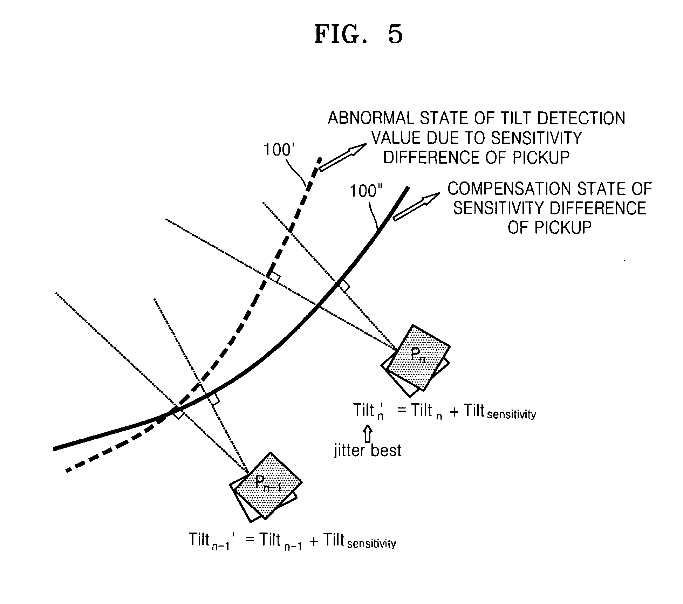

The abnormal component caused by the sensitivity difference of the optical pickup with respect to a particular type of information storage medium is obtained by a subtraction of the tilt value that is the jitter best at a predetermined local point of the information storage medium from an actual tilt value (the tilt value that is primarily compensated as described with reference to FIGS. 3 and 4) at the predetermined local point. The abnormal component may be obtained at any local points of the information storage medium. For example, the abnormal component may be obtained at a local point located on the outer circumference of the information storage medium. The following description will be done based on an example where the abnormal component is obtained at the local point located on the outer circumference. This will be described in more detail with reference to FIG. 5.

FIG. 5 is a reference view illustrating a method of obtaining the abnormal component caused by the sensitivity difference. Referring to FIG. 5, the method of obtaining the tilt value that represents the jitter best at the local point $P_n$ is identical to that described with reference to FIG. 4.

When a tilt value obtained when the measured jitter value is the jitter best at the local point $P_n$ of the outer circumference is $Tilt_{n'}$, the tilt value $Tilt_{n'}$ is represented as a sum of a tilt value $Tilt_n$ that is primarily compensated for at the local point $P_n$ and a tilt value $Tilt_{sensitivity}$ that is caused by the abnormal component caused by the sensitivity difference. Therefore, this can be expressed by the following equation.

$$Tilt_{n'} = Tilt_n + Tilt_{sensitivity}$$

Therefore, the tilt value $Tilt_{sensitivity}$ caused by the abnormal component by the sensitivity difference can be obtained according to the following equation.

$$Tilt_{sensitivity} = Tilt_{n'} - Tilt_n$$

Next, the tilt value $Tilt_{sensitivity}$ caused by the abnormal component calculated at the outer circumference of the information storage medium is added to the tilt value that is calculated at another local point of the information storage medium (250).

Referring to FIG. 5, the tilt is secondarily compensated for by an addition of the tilt value caused by the abnormal component, which is calculated at the outer circumference of the information storage medium, to a tilt value that is calculated at another local point of the information storage medium. For example, the secondary compensation of the tilt $Tilt_{n-1}$ at a local point $P_{n-1}$ distant from the inner circumference of the information storage medium by a predetermined distance can be realized according to the following equation.

$$Tilt_{n-1}' = Tilt_{n-1} + Tilt_{sensitivity}$$

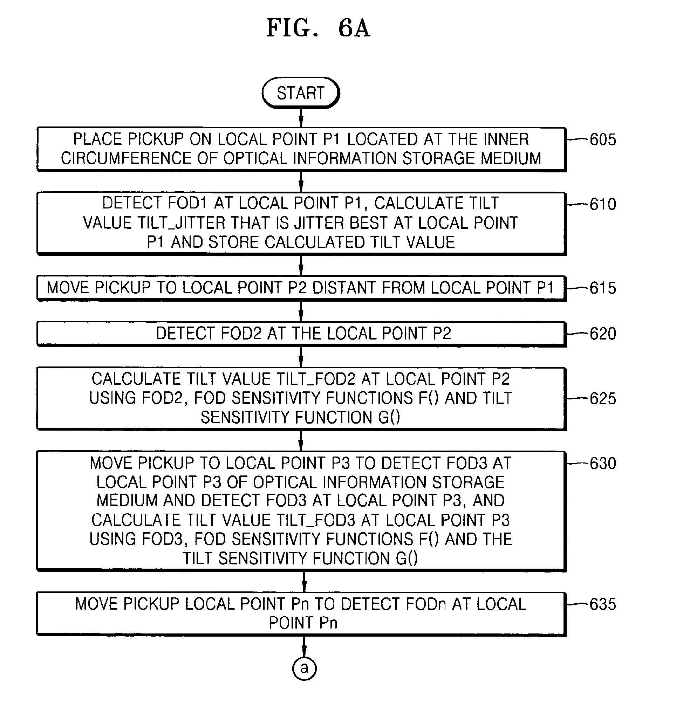

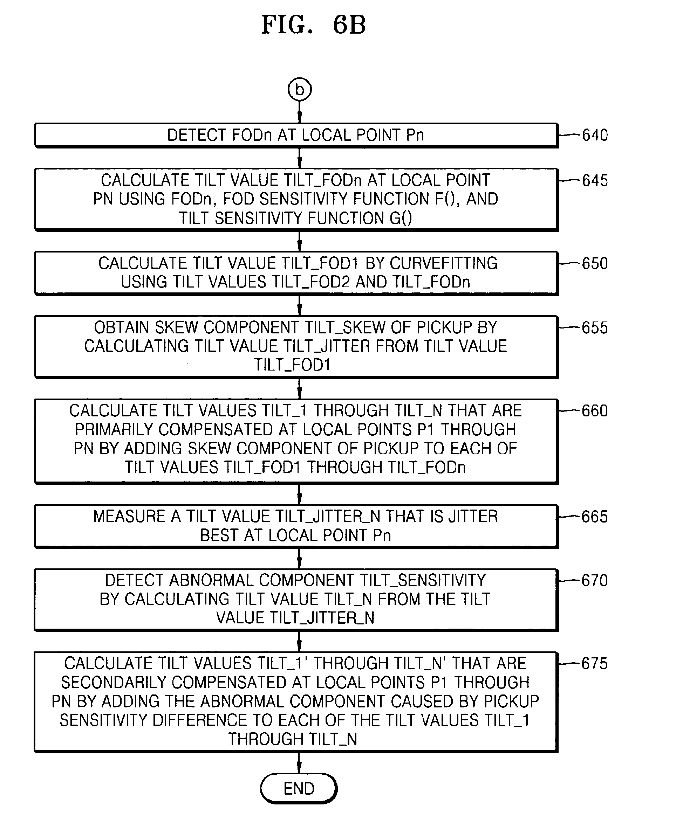

FIG. 6A and 6B are flowcharts to illustrate the tilt compensation method depicted in FIG. 2 in more detail. The pickup is placed on the local point P1 located at the inner circumference of the information storage medium (605). Next, an FOD1 is detected at the local point P1 and the tilt value Tilt_jitter that is the jitter best at the local point P1 is calculated and is stored in the storing unit (610). Then, the pickup moves to a local point P2 distant from the local point P1 by a distance D to detect an FOD2 at the local point P2 of the information storage medium (615). The FOD2 is detected at the local point P2 (620). The tilt value Tilt_fod2 at the local point P2 is calculated using the FOD2, the FOD sensitivity function $f(FOD_n)$ and the tilt sensitivity function $g(\theta n)$ (625).

Then, the pickup moves to a local point P3 distant from the local point P2 by a distance D to detect an FOD3 at the local point P3 of the information storage medium, the FOD3 is detected at the local point P3, and the tilt value Tilt_fod3 at the local point P3 is calculated using the FOD3, the FOD sensitivity function $f(FOD_n)$ and the tilt sensitivity function $g(\theta n)$ (630).

Finally, the pickup moves to a local point Pn that is separated from the local point P2 by a distance D to detect an FODn at the local point Pn (635). The FODn is detected at the local point Pn (640) and the tilt value Tilt_fodn at the local point Pn is calculated using the FODn, the FOD sensitivity function $f(FOD_n)$, and the tilt sensitivity function $g(\theta n)$ (645).

Next, a tilt value Tilt_fod1 is calculated by fitting a curve to the tilt values Tilt_fod2 and Tilt_fodn (650). Then, the skew component Tilt_skew of the pickup is obtained by calculating the tilt value Tilt_jitter from the tilt value Tilt_fod1 (655). Tilt values Tilt_1 through Tilt_n that are primarily compensated at the local points P1 through Pn are calculated by an addition of the skew component of the pickup to each of the tilt values Tilt_fod1 through Tilt_fodn (660). A tilt value Tilt_jitter_n, which represents the jitter best, is measured at the local point Pn (665). Next, the abnormal component Tilt_sensitivity is detected by calculating a tilt value Tilt_n from the tilt value Tilt_jitter_n (670).

Tilt values Tilt_1' through Tilt_n', which are secondarily compensated for at the local points P1 through Pn, are calculated by an addition of the abnormal component caused by the pickup sensitivity difference to each of the tilt values Tilt_1 through Tilt_n (675). That is, since the abnormal component is caused by the pickup sensitivity difference, the tilt is compensated for at all of the local points P1 through Pn of the information storage medium by the abnormal component.

According to aspects of the present invention, tilt detection reliability may be improved by compensating for the pickup sensitivity difference that may be caused during the manufacture of the pickup or by external factors.

It is understood that the methods disclosed hereinabove and their equivalents may be embodied within computer readable media having programs stored therein to execute the methods. Such computer readable media include, but are not limited to compact discs (CDs), digital versatile discs (DVDs), write-once DVDs, readable/writeable DVDs, high-definition DVDs (HD-DVDs), and blue-ray discs (BDs).

Although a few embodiments of the present invention have been shown and described, it would be appreciated by those skilled in the art that changes may be made in these embodiments without departing from the principles and spirit of the invention, the scope of which is defined in the claims and their equivalents.

**Claims**

1. A method of operating an apparatus in which a pickup records and/or writes information from and/or onto an information storage medium to compensate for a tilt of the information storage medium, comprising:

   calculating a tilt value at more than one local point of the information storage medium using a focus-on-drive (FOD) sensitivity function and a tilt sensitivity function of the pickup;
   obtaining a skew component of the pickup;
   obtaining an abnormal component caused by a sensitivity difference of the pickup with respect to the information storage medium; and
   compensating for the calculated tilt value using the obtained skew and abnormal components.

2. The method according to claim 1, wherein the obtaining of the skew component comprises detecting a tilt value that is a jitter best at a first local point of the information storage medium.

3. The method according to claim 2, wherein the skew component is obtained by a subtraction of the tilt value that is the jitter best at the first local point of the information storage medium from the tilt value calculated at the first local point of the information storage medium.

4. The method according to claim 2, wherein the first local point is located on an inner circumference of the information storage medium.

5. The method according to claim 2, wherein the obtaining of the abnormal component comprises detecting a tilt value that is a jitter best at a second local point of the information storage medium.

6. The method according to claim 5, wherein the abnormal component is obtained by a subtraction of the tilt value that is the jitter best at the second local point of the information storage medium from a tilt value that is primarily compensated using the skew component at the second local point of the information storage medium.

7. The method according to claim 5, wherein the second local point of the information storage medium is located on an outer circumference of the information storage medium.

8. The method according to claim 1, wherein the compensating for the tilt comprises:

   compensating for the tilt value by an addition of the obtained skew component to the calculated tilt value; and compensating for the tilt value by an addition of the abnormal component to the primarily compensated tilt value.

9. The method according to claim 1, wherein the tilt sensitivity function ($g(\theta n)$) is given as:

$$g(\theta n) = \arcsin(s/d)$$

where, "d" is a distance between local points of the information storage medium, $P_{n-1}$ and $P_n$, and "s" is given as:

$$S = f(FOD_n) - f(FOD_{n-1})$$

where, $f(FOD_n)$ is the FOD sensitivity function.

10. A method of operating an apparatus in which a pickup records and/or writes information from and/or onto an information storage medium to compensate for a tilt of the information storage medium, comprising:

   calculating a tilt value at a first local point on an inner circumference of the information storage medium using a focus-on-drive (FOD) sensitivity function and a tilt sensitivity function of the pickup and obtaining a skew component of the pickup by detecting a tilt value that is a jitter best at the first local point;
   calculating a tilt value at more than one local point of the information storage medium using the FOD sensitivity function and the tilt sensitivity function;
   obtaining an abnormal component caused by a sensitivity difference of the pickup by detecting a tilt value that is a jitter best at a second local point on an outer circumference of the information storage medium; and compensating for the calculated tilt value using the obtained skew and abnormal components.

11. The method according to claim 10, wherein the tilt sensitivity function ($g(\theta n)$) is given as:

$$g(\theta n) = \arcsin(s/d)$$

where, "d" is a distance between local points of the information storage medium, $P_{n-1}$ and $P_n$, and "s" is given as:

$$S = f(FOD_n) - f(FOD_{n-1})$$

where, $f(FOD_n)$ is the FOD sensitivity function.

**12.** An apparatus to compensate for a tilt of an information storage medium, comprising:

an optical pickup to emit and/or to receive light to and/or from the information storage medium; and
a control unit to calculate a tilt value at more than one local point of the information storage medium using a focus-on-drive (FOD) sensitivity function and a tilt sensitivity function of the pickup, to obtain a skew component of the pickup and an abnormal component caused by a sensitivity difference of the pickup, and to compensate for the calculated tilt value using the obtained skew and abnormal components.

**13.** The apparatus according to claim 12, wherein the control unit detects a tilt value that is a jitter best at a first local point of the information storage medium to obtain the skew component.

**14.** The apparatus according to claim 13, wherein the skew component is obtained by a subtraction of the tilt value that is the jitter best at the first local point of the information storage medium from the tilt value calculated at the first local point of the information storage medium.

**15.** The apparatus according to claim 13, wherein the first local point of the information storage medium is located on an inner circumference of the information storage medium.

**16.** The apparatus according to claim 13, wherein the control unit detects a tilt value that is a jitter best at a second local point of the information storage medium to obtain the abnormal component.

**17.** The apparatus according to claim 16, wherein the abnormal component is obtained by a subtraction of the tilt value that is the jitter best at the second local point of the information storage medium from a tilt value that is primarily compensated using the skew component at the second local point of the information storage medium.

**18.** The apparatus according to claim 16, wherein the second local point of the information storage medium is located on an outer circumference of the information storage medium.

**19.** The apparatus according to claim 12, wherein the control unit primarily compensates for the tilt by an addition of the obtained skew component to the calculated tilt value and secondarily compensates for the tilt value by an addition of the abnormal component to the primarily compensated tile value.

**20.** An apparatus to compensate for a tilt of an information storage medium, comprising:

a pickup to emit and/or receive light to and/or from the information storage medium; and
a control unit to calculate a tilt value at a first local point on an inner circumference of the information storage medium using a focus-on-drive (FOD) sensitivity function and a tilt sensitivity function of an optical pickup of an recording and/or reproducing apparatus which records and/or reproduces data onto and/or from the medium, to obtain a skew component of the pickup by detecting a tilt value that is a jitter best at the first local point of the information storage medium and by detecting a tilt value that is a jitter best at the first local point, to calculate a tilt value at more than one local point of the information storage medium using the FOD sensitivity function and the tilt sensitivity function, to obtain an abnormal component caused by a sensitivity difference of the pickup by detecting a tilt value that is a jitter best at a second local point on an outer circumference of the information storage medium, and to compensate for the calculated tilt value using the obtained skew and abnormal components.

**21.** A method of operating a recording and/or reproducing apparatus in which an optical pickup writes and/or read information to and/or from an information storage medium to compensate for a tilt of the information storage medium, comprising:

calculating a tilt value at more than one local point of the information storage medium using a focus-on-drive (FOD) sensitivity function and a tilt sensitivity function ($g(\theta n)$) of the optical pickup; and

compensating for the calculated tilt value by manipulating the optical pickup in accordance with the tilt value to position the optical pickup to normally face the information storage medium.

**22.** The method according to claim 21, wherein the tilt sensitivity function ($g(\theta n)$) is given as:

$$g(\theta n) = \arcsin(s/d)$$

where, "d" is a distance between local points of the information storage medium, $P_{n-1}$ and $P_n$, and "s" is given as:

$$S = f(FOD_n) - f(FOD_{n-1})$$

where, $f(FOD_n)$ is the FOD sensitivity function.

**23.** A computer readable medium having a program stored thereon to execute the method of claim 19.

# FIG. 1

# FIG. 2

```
        ( START )
            │
            ▼
┌───────────────────────────────────────┐
│   CALCULATE TILT VALUE AT MORE THAN ONE │──210
│   LOCAL POINT OF INFORMATION STORAGE MEDIUM │
└───────────────────────────────────────┘
            │
            ▼
┌───────────────────────────────────────┐
│  OBTAIN SKEW COMPONENT OF PICKUP BY DETECTING │
│    TILE VALUE THAT IS JITTER BEST AT INNER    │──220
│  CIRCUMFERENCE OF INFORMATION STORAGE MEDIUM  │
└───────────────────────────────────────┘
            │
            ▼
┌───────────────────────────────────────┐
│   PRIMARILY COMPENSATE FOR TILT VALUE BY ADDING │
│      SKEW COMPONENT TO TILT CALCULATED AT      │──230
│               THE LOCAL POINT                   │
└───────────────────────────────────────┘
            │
            ▼
┌───────────────────────────────────────┐
│  OBTAIN ABNORMAL COMPONENT CAUSED BY SENSITIVITY │
│   DIFFERENCE OF PICKUP BY DETECTING TILT THAT IS │──240
│ JITTER BEST AT OUTER CIRCUMFERENCE OF INFORMATION │
│               STORAGE MEDIUM                     │
└───────────────────────────────────────┘
            │
            ▼
┌───────────────────────────────────────┐
│  SECONDARILY COMPENSATE FOR TILT VALUE BY ADDING │──250
│     ABNORMAL COMPONENT TO THE PRIMARILY          │
│            COMPENSATED TILT VALUE                 │
└───────────────────────────────────────┘
            │
            ▼
         ( END )
```

# FIG. 3

$s = f(FOD_n) - f(FOD_{n-1})$ (f() ; function of FOD sensitivity)

$\theta_n = \arcsin(s/d)$

$Tilt_{fodn} = g(\theta_n)$   ( g() ; function of Tilt sensitivity)

y
b
d
f
h

q

# FIG. 4

$$Tilt_3 = Tilt_{fod\_3} + Tilt_{skew}$$

$$Tilt_2 = Tilt_{fod\_2} + Tilt_{skew}$$

$$Tilt_1 = Tilt_{fod\_1} + Tilt_{skew}$$

jitter best

# FIG. 5

ABNORMAL STATE OF TILT DETECTION
VALUE DUE TO SENSITIVITY
DIFFERENCE OF PICKUP

100'

100"  COMPENSATION STATE OF
SENSITIVITY DIFFERENCE
OF PICKUP

$P_n$

$Tilt_n' = Tilt_n + Tilt_{sensitivity}$

⇑
jitter best

$P_{n-1}$

$Tilt_{n-1}' = Tilt_{n-1} + Tilt_{sensitivity}$

# FIG. 6A

```
        ( START )
            │
            ▼
```

| PLACE PICKUP ON LOCAL POINT P1 LOCATED AT THE INNER CIRCUMFERENCE OF OPTICAL INFORMATION STORAGE MEDIUM | —605 |

| DETECT FOD1 AT LOCAL POINT P1, CALCULATE TILT VALUE TILT_JITTER THAT IS JITTER BEST AT LOCAL POINT P1 AND STORE CALCULATED TILT VALUE | —610 |

| MOVE PICKUP TO LOCAL POINT P2 DISTANT FROM LOCAL POINT P1 | —615 |

| DETECT FOD2 AT THE LOCAL POINT P2 | —620 |

| CALCULATE TILT VALUE TILT_FOD2 AT LOCAL POINT P2 USING FOD2, FOD SENSITIVITY FUNCTIONS F() AND TILT SENSITIVITY FUNCTION G() | —625 |

| MOVE PICKUP TO LOCAL POINT P3 TO DETECT FOD3 AT LOCAL POINT P3 OF OPTICAL INFORMATION STORAGE MEDIUM AND DETECT FOD3 AT LOCAL POINT P3, AND CALCULATE TILT VALUE TILT_FOD3 AT LOCAL POINT P3 USING FOD3, FOD SENSITIVITY FUNCTIONS F() AND THE TILT SENSITIVITY FUNCTION G() | —630 |

| MOVE PICKUP LOCAL POINT Pn TO DETECT FODn AT LOCAL POINT Pn | —635 |

```
            │
            ▼
          (a)
```

# FIG. 6B

(b)

DETECT FODn AT LOCAL POINT Pn ——640

CALCULATE TILT VALUE TILT_FODn AT LOCAL POINT PN USING FODn, FOD SENSITIVITY FUNCTION F(), AND TILT SENSITIVITY FUNCTION G() ——645

CALCULATE TILT VALUE TILT_FOD1 BY CURVEFITTING USING TILT VALUES TILT_FOD2 AND TILT_FODn ——650

OBTAIN SKEW COMPONENT TILT_SKEW OF PICKUP BY CALCULATING TILT VALUE TILT_JITTER FROM TILT VALUE TILT_FOD1 ——655

CALCULATE TILT VALUES TILT_1 THROUGH TILT_N THAT ARE PRIMARILY COMPENSATED AT LOCAL POINTS P1 THROUGH PN BY ADDING SKEW COMPONENT OF PICKUP TO EACH OF TILT VALUES TILT_FOD1 THROUGH TILT_FODn ——660

MEASURE A TILT VALUE TILT_JITTER_N THAT IS JITTER BEST AT LOCAL POINT Pn ——665

DETECT ABNORMAL COMPONENT TILT_SENSITIVITY BY CALCULATING TILT VALUE TILT_N FROM THE TILT VALUE TILT_JITTER_N ——670

CALCULATE TILT VALUES TILT_1' THROUGH TILT_N' THAT ARE SECONDARILY COMPENSATED AT LOCAL POINTS P1 THROUGH PN BY ADDING THE ABNORMAL COMPONENT CAUSED BY PICKUP SENSITIVITY DIFFERENCE TO EACH OF THE TILT VALUES TILT_1 THROUGH TILT_N ——675

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050107640